# EUROPEAN PATENT APPLICATION

(11) **EP 4 787 131 A1**
(43) Date of publication of application: **05.08.2026**
(21) Application number: 26153696.5
(22) Date of filing: 23.01.2026
(51) Int. Cl.: G06F 3/044, G06K 7/10, H01Q 1/22, H01Q 1/24, H01Q 1/38, H04B 5/43, H01Q 1/46

(54) **ANTENNA EMBEDDED IN THE DISPLAY BACK METAL PLATE SHIELD OF MOBILE DEVICES**

(30) Priority: 27.01.2025 US 202519038688
(71) Applicant: Datalogic IP Tech S.r.l., 40012 Calderara di Reno (BO) (IT)
(72) Inventor: LIPPARINI, Valerio, I-40011 Anzola dell'Emilia (BO) (IT); PERSICI, William, I-40059 Medicina (BO) (IT)
(74) Representative: Porta & Consulenti Associati S.p.A.

(57) **Abstract**

An electronic device including a printed circuit board (PCB) on which electronics are disposed. The electronic device includes an electronic display (303) on which visual content is displayed for a user to view. The electronic display (303) includes a back plate (301) and an antenna (300) defined by the back plate (301). At least one contact (312) is electrically connected to a portion of the back plate (301) defining the antenna (300). A screen is disposed on an opposite side relative to the back plate (301) such that an antenna pattern radiated by the antenna (300)extends through the screen.

## Description

### TECHNICAL FIELD

The present disclosure relates generally to antennas for mobile devices, and more particularly, to antennas for facilitating receiving payments by a mobile device via a front screen thereof.

### BACKGROUND

Electronic mobile devices, such as mobile phones, usually integrate from 10-14 antennas: 6-8 for telephone signals, 2-4 for WiFi^{®}, 1-2 for global positioning systems (GPS) signals, and 1 for near field communication (NFC) signals. The antennas need to be positioned and configured based on the display shape, which includes positioning and configuring the antennas in a manner that maintains the antennas a correct clearance from an electronic display of the electronic mobile devices so that shielding properties of the display are avoided. As such, the only room available for the antennas is the edge of the mobile electronic device (e.g., mobile phone, personal digital assistant (PDA), barcode scanner, etc.). The edge of the mobile electronic devices, however, is also the only place for buttons, such as volume up and down, ON/OFF button, scan button, connectors, such as USB and SD card/SIM card port, etc. As a result of the space at the edge(s) of mobile electronic devices being limited, a trade off between placement and performance of the antennas and device dimensions may be made. A typical application suffering from display shielding is payment via NFC technology. If the antenna configured to communicate NFC communications signals (an NFC antenna) is shielded by the electronic display, the antenna cannot detect the NFC device (e.g., payment card). Furthermore, the NFC payment may be used to detect cards in front of the display, thereby making the problem of communicating with the NFC device via the electronic display even more difficult.

Mobile devices, such as smartphones and/or other mobile electronic devices) can be configured to receive and accept payments by payment cards (e.g., credit card, debit card, prepaid card, etc.) or any other type or shape of payment device using near field communication (NFC) and/or other wireless technologies. For example, a payor may place a credit card or another mobile device containing a payment device proximate to or in contact with a receiving mobile device of a user. The receiving mobile device accepts and processes the necessary information related to the payment. Existing mobile devices are configured for a payment card to be placed proximate a rear housing, which obscures the payment of the payment card. As a result of the payment card having to be positioned behind the mobile device, users of both the payment card and mobile device tend to find the method of payment impractical or inconvenient.

Standard antenna designs that are configured to communicate NFC signals in mobile devices use coils that utilize a flexible printed circuit board (PCB) (FPC) to host the antenna structure. These antenna designs utilize an NFC antenna driver circuit between an NFC transmitter that typically includes fourteen electronic components that in part include impedance tuning components. Because the standard antennas that communicate NFC signals are on FPCs, the antennas may also consume space within the mobile device. Still yet, coil antennas connect to a main PCB using two contacts, which require corresponding springs. In addition to standard antennas using additional components and structure, assembly of the structure and components is needed. As such, there is a need for a mobile device with an antenna configured to communicate NFC signals that enables a reduction in the number of components to be assembled to support the antenna, and enables the mobile device to accept payments using NFC technology in a more practical and convenient manner.

### BRIEF SUMMARY

To overcome the problem of receiving payments by existing mobile electronic devices (mobile devices) with near field communication (NFC) configurations via a rear housing of the mobile devices, one or more antennas along with supporting hardware may be configured to enable an antenna pattern with NFC signals to exit via a front side screen of mobile devices for reading a payment device, such as a payment card. The configuration of the mobile device that supports a front side reading of a payment card may reduce a number of existing mechanical components to support the antenna(s) and orientations thereof, thereby saving production time and money of the mobile devices. As a result of being able to read a payment card via the front side of the mobile device (e.g., via an electronic display with a screen, such as a touch screen), a user interface may be designed for display on the screen to further improve practical and convenient reading of payment devices (e.g., display a successful or unsuccessful read notice of the payment device so both the payor and payee can see the notice).

The present invention relates to an electronic device according to claim 1.

One embodiment of an electronic device may include a PCB having a front portion on which electronics are disposed. An electronic display on which visuals are displayed for a user to view may be provided. A rear portion of the electronic display may be configured to interact with the front portion of the PCB. A back plate of the electronic display and an antenna defined by the back plate may also be provided. At least one contact may be electrically connected to a portion of the back plate defining the antenna. A screen may be disposed on an opposite side relative to the back plate defining the antenna such that an antenna radiation pattern radiated by the antenna extends through the screen.

The present invention also relates to a method of communicating with a payment device with a near field communication (NFC) component from an electronic device according to claim 14.

One embodiment of a method of communicating with a payment device may include communicating a first signal to an antenna defined by a back plate of an electronic display of the electronic device. The signal may be transmitted from the antenna through a screen of the electronic device of the electronic device. In response to the payment device with a component being positioned at the screen, a second signal may be received through the screen of the electronic device by the antenna.

The present invention further relates to an electronic display, comprising a back plate, an antenna defined by the back plate, at least one contact electrically connected to portion of the back plate defining the antenna and a screen disposed on an opposite side relative to the back plate defining the antenna such that an antenna radiation pattern radiated by the antenna extends through the screen.

The antenna can be a strip formed from the back plate and coplanar therewith, and the at least one contact includes one and only one contact positioned on the strip forming the antenna.

The antenna can be defined by a slot removed from the back plate, thereby being coplanar therewith, and the at least one contact includes two contacts, one contact on either side of the slot.

The antenna can be a single-ended antenna.

### BRIEF DESCRIPTION OF THE DRAWINGS

Illustrative embodiments of the present invention are described in detail below with reference to the attached drawing figures, which are incorporated by reference herein and wherein:
**FIG. 1** is an illustration of an illustrative mobile device receiving a payment;
**FIG. 2** is a rear view of an illustrative electronic display of a conventional mobile device;
**FIG. 3A** is a rear view of an illustrative electronic display of a mobile device, according to an embodiment of the disclosure;
**FIG. 3B** is a rear view of the electronic display of **FIG. 3A** with a first material, such as a ferrite material, disposed over the antenna, according to an embodiment of the disclosure;
**FIG. 3C** is a rear view of the electronic display of **FIG. 3A** with as second material, such as an adhesive copper, disposed over the first material and the antenna, according to an embodiment of the disclosure;
**FIG. 3D** is a front view of an illustrative back portion of the mobile device of **FIG. 3A** that is to be attached to the portion of the mobile device of **FIG. 3C****;**
**FIG. 4A** is a simple block diagram of illustrative layers of mechanical and electrical components within a mobile device including an antenna configured to communicate NFC signals, as described herein;
**FIG. 4B** is another simple block diagram of illustrative layers of mechanical and electrical components within a mobile device including an antenna configured to communicate NFC signals, as described herein;
**FIG. 4C** is another block diagram depicting layers of the mobile device including an antenna configured to communicate far-field signals, such as wireless local area network (WLAN) or wireless wide area network (WWAN), as described herein;
**FIG. 5** is a schematic of an illustrative electrical circuit including tuning components of a mobile device for use with a single-ended antenna;
**FIG. 6** is another schematic of an alternative illustrative electrical circuit including tuning components of a mobile device for use with a single-ended antenna;
**FIG. 7A** is an illustration of an alternative configuration of an antenna configured to communicate NFC signals, according to an embodiment of the disclosure;
**FIG. 7B** are illustrations of three different configurations of the antenna of **FIG. 7A****,** according to an embodiment of the disclosure;
**FIG. 8A** is a schematic of an illustrative circuit configured to drive and tune a non-single-ended NFC antenna, such as a loop antenna or the NFC antenna of **FIG. 7A****,** by an NFC transceiver, according to an embodiment of the disclosure;
**FIG. 8B** is an illustration of the antenna of **FIG. 7A** electrically connected via contacts disposed at the antenna for signals to be communicated to sand from the antenna;
**FIG. 9** is an illustration of an alternative mobile device that includes alternative antennas, such as far field antennas, defined by a back plate of an electronic display for communicating non-NFC signals, according to an embodiment of the disclosure;
**FIG. 10** is an illustration showing one of the antennas of **FIG. 9** in greater detail, according to an embodiment of the disclosure;
**FIG. 11** is an illustration showing the other one of the antennas of **FIG. 9** in greater detail, according to an embodiment of the disclosure;
**FIG. 12** is an illustrative graph depicting an illustrative antenna return loss over bandwidth of the antennas of **FIG. 9****,** according to an embodiment of the disclosure;
**FIG. 13** is an illustration showing alternative configurations of the antennas of **FIG. 9****,** according to an embodiment of the disclosure;
**FIG. 14** is an illustration showing alternative configurations of the antennas of a mobile device, according to an embodiment of the disclosure; and
**FIG. 15** is a flow chart illustrating an illustrative process for communicating with a near field communication (NFC) component via a screen of a mobile device, according to an embodiment of the disclosure.

### DETAILED DESCRIPTION

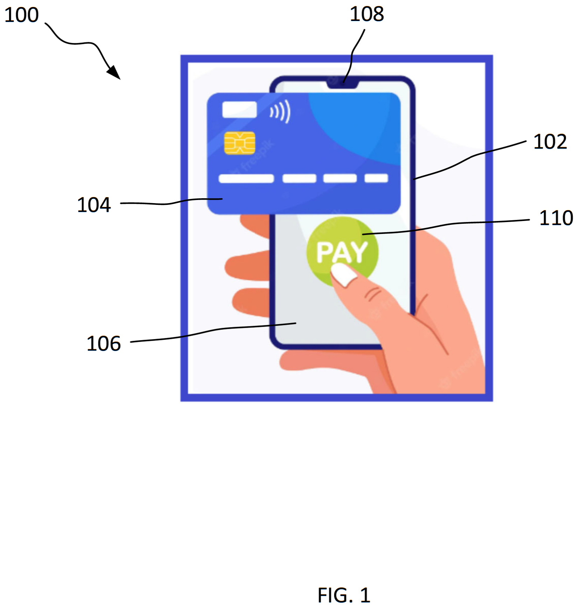

With regard to **FIG. 1****,** an illustration of an illustrative scene **100** in which an electronic device, such as a mobile electronic device or mobile device **102** (e.g., a cell phone, a tablet, a payment kiosk, a card reader, a handheld barcode reader, a mobile barcode reader, etc.), of a user may be used to receive a payment from a payment device **104** is shown. It should be understood that the principles described herein may be applied to non-mobile electronic devices with electronic displays, as well (e.g., fixed barcode readers, payment kiosk, self-checkout readers, etc.). According to the principles described herein, the payment device **104** (e.g., a Near Field Communication (NFC) component, a credit card, a mobile wallet, a mobile device, etc.) may be positioned at least partially over and/or in proximity to a screen **106** (e.g., a glass, a display glass, cover glass, touch-sensitive screen, etc.) of the mobile device **102** by the user or a payor. In this manner, the experience of the user and the payor may be enhanced by enabling payment to be performed via the screen **106** on a front side of the mobile electronic device **102,** for example. In the embodiment of **FIG. 1****,** the payment device **104** is positioned near an upper portion of the mobile device **102** near a speaker **108** of the mobile device **102.** In other embodiments, the mobile device **102** may be configured in another manner to receive the payment device **104** in a different position. As shown, a pay button **110** displayed on the screen **106** may be pressed to cause a signal (e.g., an NFC signal) to be generated in performing payments with the payment device **104.** In an embodiment, a successful or unsuccessful payment feature may be displayed in response to a successful or unsuccessful payment attempt using the payment device **104.**

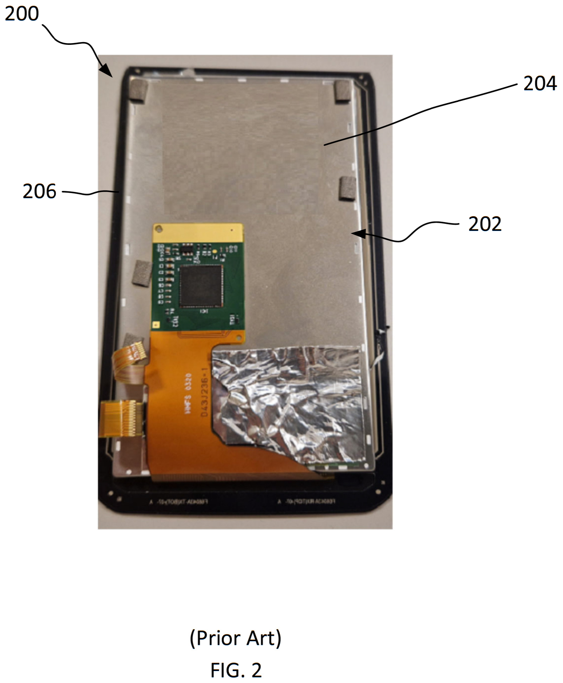

In **FIG. 2****,** a front portion **200** (e.g., a front half, etc.) of a conventional mobile electronic device that forms an electronic display **202** may include a back plate or back shield **204,** and screen (also called glass or cover glass) **206,** and electronics (not shown). An electronic display (also referred as display) includes multiple components that together provide the structure and functionality used to render an image on a screen. Screen (also called cover glass, or glass) and back plate (also called backplate, shield, or back shield) are some of these components usually present in an electronic display. In the embodiment of **FIG. 2****,** the electronic display **202** of the mobile device **102** is shown face down. Included into to electronic display **202** is an electronic screen **206,** such as a touch-sensitive screen, shown face down, and a back plate **204.** The electronic display **202** may include electronics that define pixels configured to emit light to display visual information (e.g., text, images, videos, etc.) to the user through the screen **206.** The electronic display **202** may be a liquid crystal display (LCD), an organic light-emitting diode (OLED) display, an active-matrix organic light-emitting diode (AMOLED) display, a super AMOLED display, a dynamic AMOLED display, a thin film transistor (TFT) display, an in-plane switching (IPS) display, etc. The back plate **204** is generally formed of metal and substantially covers a rear portion of the electronic display **202** to assist in the separation of components of the mobile device **102** of **FIG. 1****,** shielding of components of the electronic display **202,** and/or thermal regulation for the mobile device **102.** As a result of the back plate **204** performing a shielding function, an antenna (not shown), that is generally a coil configuration printed on a printed circuit board (PCB) and configured to output signals (e.g., NFC signals, etc.) via a back housing of the electronic display is positioned behind the back plate **204,** which results in the signals being output from the back of the mobile device (i.e., opposite side of the screen **206**)**.**

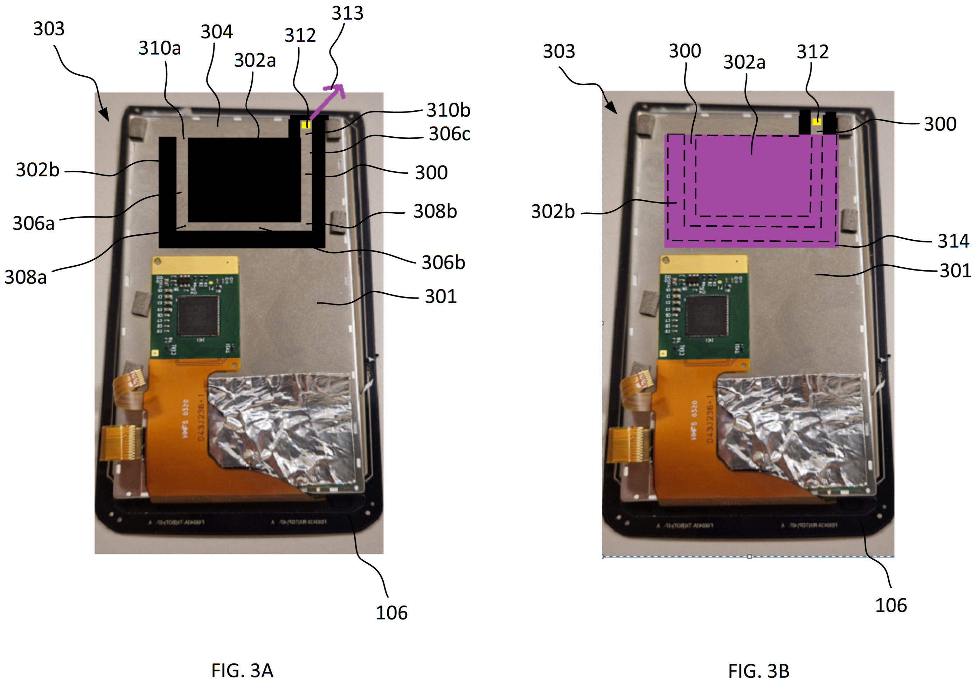

Turning now to **FIG. 3A****,** an illustrative antenna **300** is shown to be defined by a back plate **301** of an electronic display **303.** In being defined by the back plate **301,** an antenna **300** is embedded on or into the back plate **301** of the electronic display **303.** The electronic display **303** may include the back plate **301** (e.g., a back shield, etc.), the screen **106,** and electronics that define pixels configured to emit light to render and display visual information (e.g., text, images, videos, etc.) (not shown in **FIG. 3A**). The antenna **300** may be an antenna configured to conduct and radiate NFC RF signals (i.e., RF signals at NFC frequencies), which enables sharing of payloads of data between an NFC device and a mobile device in this case. As understood in the art, NFC tags store and transmit data when positioned at a close range relative to NFC-enabled devices. The antenna **300** may communicate with a processor unit or other computing device of the mobile device **102,** for example. While the antennas, devices, and components described herein may refer to NFC technology, it should be understood that other signals may be communicated via and to the antennas, devices, and components described herein.

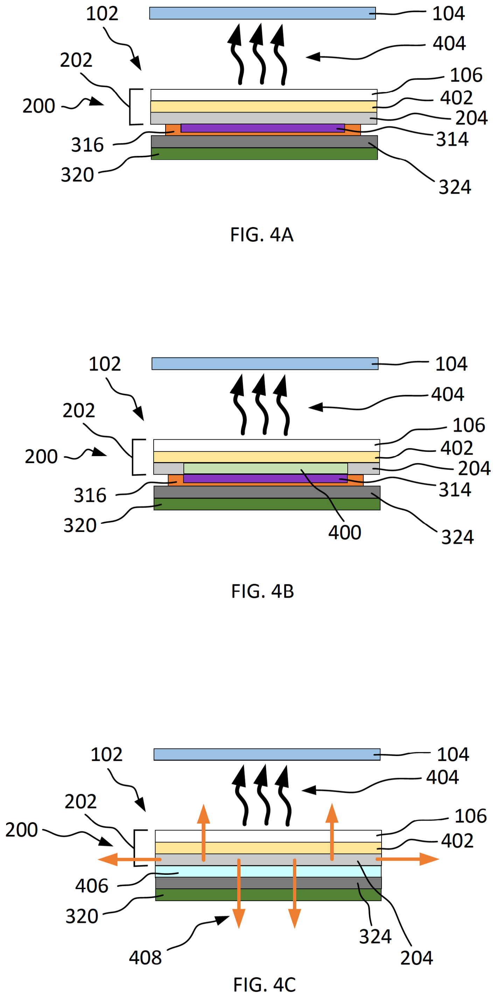

The back plate **301** may define the antenna **300** in a strip pattern (e.g., a strip antenna) coplanar with the back plate **301.** Because the back plate **301** is to conduct RF signals, the back plate **301** may be formed of an RF conductive material (e.g., Cu, Ni18, Zn20 alloy, etc.) to conduct NFC RF signals. The antenna **300** may generally be defined by removing material from the back plate **301.** For example, removing material from the back plate **301** may create apertures, such as negative space **302a** and **302b** (collectively **302**). Disposed around the antenna **300** may be an aperture (i.e., nothing is positioned in the negative space **302**), or another material (e.g., a dielectric material, a third material **400,** as shown in **FIG. 4**), which allows a magnetic field (e.g., an H-field, etc.) to pass towards and through the screen **106.**

In the embodiment of **FIG. 3A****,** the antenna **300** is shown to form a U-shape, in this case a rectangular "U," extending from an upper portion **304** of the back plate **301.** In an embodiment, the antenna **300** may be defined by and be in a common plane as the back plate **301** and include (i) a first antenna segment **306a** extending downwards (i.e., towards a center region of the back plate **301**), (ii) a second antenna segment **306b** at a first substantially right angle **308a** from the first antenna segment **306a** so as to extend laterally across the back plate **301,** and (iii) a third antenna segment **306c** at a second substantially right angle **308b** from the second antenna segment **306b** so as to extend upwards towards the upper portion **304** of the back plate **301.** In other embodiments, the antenna **300** may form an L-shape, a V-shape, a curved shape, or any other shape that provides for communicating signals (e.g., NFC signals, etc.) through the screen **106** (i.e., directed towards and extends through the screen **106** ) of the mobile device **102.**

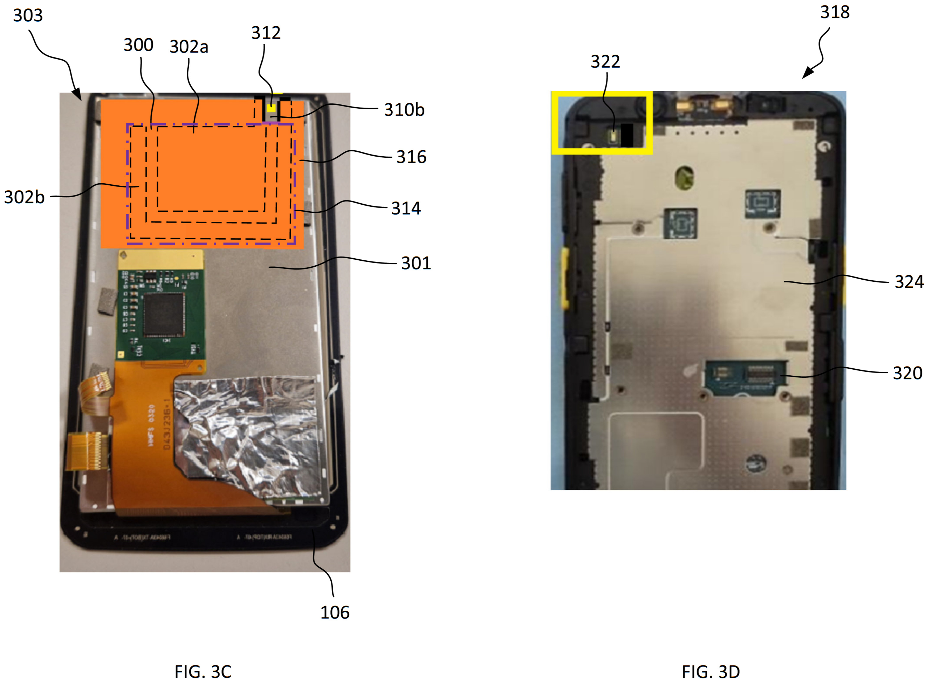

The antenna **300** may be a single-ended conductive line, whereby a first end **310a** is connected to ground (e.g., 0 volts DC) while a second end **310b** is connected to or in contact with an electrical contact, such as electrical contact **312** of a PCB **320,** as shown in **FIG. 3D****.** A contact **312** may be electrically connected to the antenna **300** (e.g., the contact **312** may be positioned on the antenna **300**). The contact **312** may be used to be in contact with the electrical contact, optionally in the form of a spring **322,** of the PCB, as further described herein. The antenna **300** may not be a standard multiturn coil antenna, but may perform the same or similar function as a multiturn coil antenna. It should be understood that an antenna with less or more complexity and defined by the back plate **301** that is capable of communicating a signal **313** (e.g., an NFC signal, etc.) via the screen **106** of the mobile device **102** may be utilized, as well.

**FIG. 3B** depicts the electronic display **303** of the mobile device **102.** The illustrative antenna **300** is shown to be defined by the back plate **301,** as previously described with regard to **FIG. 3A****.** As shown in **FIG. 3B****,** a first material **314** may be positioned over and/or behind at least a portion of the back plate **301** defining the antenna **300.** The first material **314** may be, for example, ferrite material or another similar material. The first material **314** may be thin (e.g., less than about 10% of the thickness of the back plate **301**) and may support specific frequency outputs by the antenna **300** used for NFC communications (e.g., 13.56 MHz, etc.). As shown in **FIG. 3C****,** a second material **316** may be positioned over and/or behind the first material **314.** The second material **316** may be configured to cover the first material **314** and may function to shield components of the electronic display in a similar manner to the back plate **301.** The second material **316** may be, for example, adhesive copper, or another material. The first material **314** and the second material **316** may not cover the contact **312** and/or a portion of the antenna **300,** such as the second end **310b** (e.g., a distal end) of the antenna **300.** The contact **312** may be positioned at another location of the antenna **300.**

**FIG. 3D** depicts another portion of the mobile device **102.** The portion of the mobile device **102** shown in **FIG. 3D** may be a rear portion **318** (e.g., a back half, a portion opposite the screen **106,** etc.). In the embodiment of **FIG. 3D****,** a back surface of the rear portion **318** of the mobile device **102** is shown to be face down. When the mobile device **102** is fully assembled, the rear portion **318** of the mobile device **102** may be positioned to interface with the portion of the mobile device **102,** as shown in **FIGS. 3A-3C****.** For example, the electronic display **303** of the mobile device **102** of **FIG. 3C** may be flipped along a vertical axis and positioned on top of the rear portion **318** of the mobile device **102** of **FIG. 3D****.**

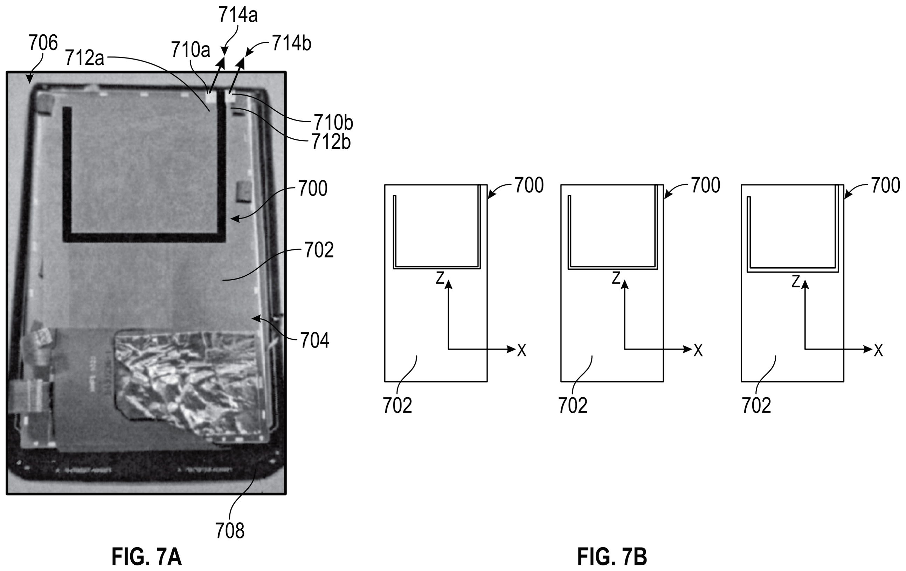

The rear portion **318** of the mobile device **102** may generally contain the PCB **320** on which electronics are disposed and/or other components. The PCB **320** may be electrically connected to and power components of the mobile device **102** to create a functioning circuit or assembly. The PCB **320** is generally made from a non-conductive material and may include conductive lines printed on or etched into a surface of the non-conductive material. The PCB **320** may include a PCB spring **322** The PCB spring **322** may electrically connect with or engage the contact **312 (****FIGS. 3A-3C****)** of the antenna **300** in order to electrically connect the antenna **300** to the PCB **320.** In the embodiment of **FIG. 3D****,** one PCB spring **322** is used as the antenna **300** is a single-ended antenna, as opposed to a loop antenna or non-single-ended antenna, such as shown in **FIGS. 7A** and **7B****.** In other embodiments, additional PCB springs may be utilized.

Positioned over and/or in front of at least a portion of the PCB **320** and disposed on the PCB **320** may be a metal frame or PCB shield **324** configured to provide for mechanical robustness and stiffness. The PCB shield **324** may alternatively be formed of plastic or other material to be lighter than metal, and to assist in separating components of the mobile device **102** and/or shielding components of the PCB **320.** As shown in **FIG. 3D****,** the PCB shield **324** may substantially cover the PCB **320,** although portions of the PCB **320** may be visible or accessible from a front of the PCB shield **324.** The PCB spring **322** may not be covered by the PCB shield **324** and may be accessible from the front of the PCB shield **324.** When the mobile device **102** is fully assembled, the contact **312** of the antenna **300** may contact the PCB spring **322** of the PCB **320** and form an electrical connection.

Turning now to **FIGS. 4A-4C****,** diagrams depicting layers of the mobile device **102** including an antenna as described herein is shown. More specifically, **FIGS. 4A-4B** are related to a near field communication antenna, while **FIG. 4C** relates to far field communication antenna. The layers include the PCB **320** including electronics for operating the mobile device **102.** The PCB shield **324** may be disposed on the PCB **320.** Referring to **FIGS. 4A-4B****,** the second material **316,** which may be a copper adhesive, such as copper tape, may be disposed on the PCB shield **324.** The antenna **300** may be defined by the back plate **204.** The first material **314** (e.g., ferrite, etc.) may be disposed within or at aperture(s) of the back plate **204** that define the antenna **300.** As shown in **FIG. 4B****,** a third material **400,** such as a dielectric (e.g., air, ceramic, etc.), may also be disposed within or at aperture(s) of the back plate **204** that define the antenna **300.** On or adjacent to the back plate **204** may be a mix of materials, such as partially conductive materials or other materials, that are used to form the electronic display positioned adjacent to the screen **106.** The electronic display **202** may include electronics **402** that define pixels configured to emit light to render and display visual information (e.g., text, images, videos, etc.) to the user through the screen **106.** The electronic display **202** may include the back plate **204** (e.g., a back shield, etc.) and the screen **106.**

As further shown in **FIGS. 4A-4B****,** when the antenna **300** is operating to communicate NFC signals **404,** magnetic flux fields flow through the screen **106** (i.e., directed towards and extends through the screen **106**)**.** The signals **404** may extend through the screen **106** as defined by an antenna pattern resulting from a configuration of the antenna **300.** As a payment device **104** is brought near the screen **106** of the mobile device **102,** the payment device **104** communicatively couples with the antenna **300** for payment or other purposes (e.g., data is exchanged between the mobile device **102** and payment device **104**)**.** In an embodiment, the signals (e.g., the NFC signals, etc.) may operate over a frequency range of 13.56 MHz (or over another NFC frequency range), for example, when passing through the screen **106.** The payment device **104** may be capable of communicatively coupling with the antenna **300** at a distance of approximately 0 cm to approximately 4 cm from the screen **106** of the mobile device **102.**

In **FIG. 4C****,** another illustrative embodiment of layers of the mobile device **102** is depicted. For example, the configuration of the mobile device **102** of **FIG. 4C** may be utilized for Wireless Local Area Network (WLAN) or Wireless Wide Area Network (WWAN) far-field communications. The layers may include the PCB **320** including electronics for operating the mobile device **102.** The PCB shield **324** may be disposed on the PCB **320.** The antenna **300** may be defined by the back plate **204.** As shown in **FIG. 4C****,** a material **406,** such as a dielectric (e.g., air, ceramic, etc.), may also be disposed between the back plate **204** and the PCB shield **324.** In some embodiments, the back plate **204** may have various apertures that allow for an electromagnetic field **408** to be radiated in various directions. Electromagnetic waves of the electromagnetic field **408** may travel through the material **406** from the back plate **204,** towards and through the screen **106,** out one or more sides of the mobile device **102,and** potentially other directions.

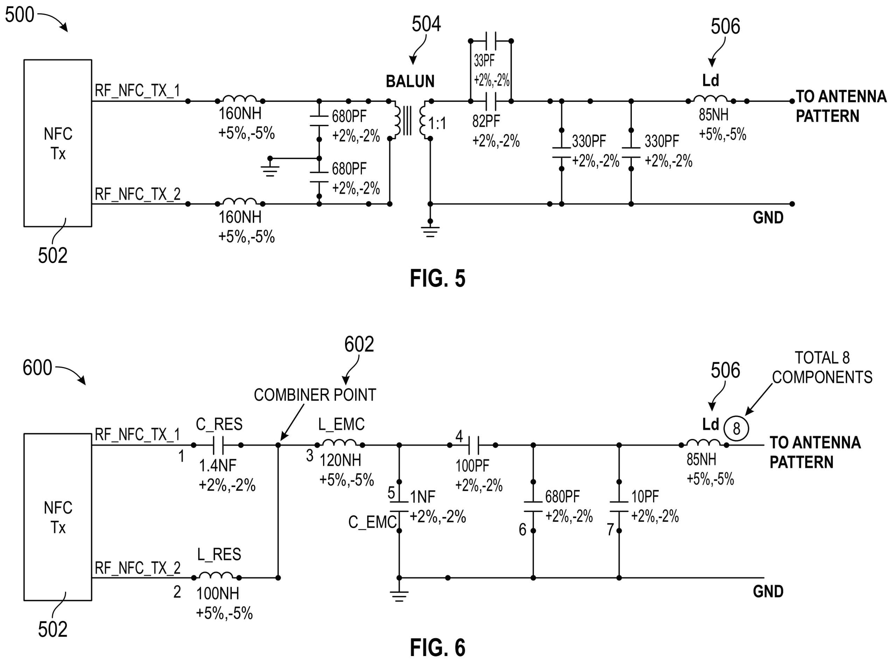

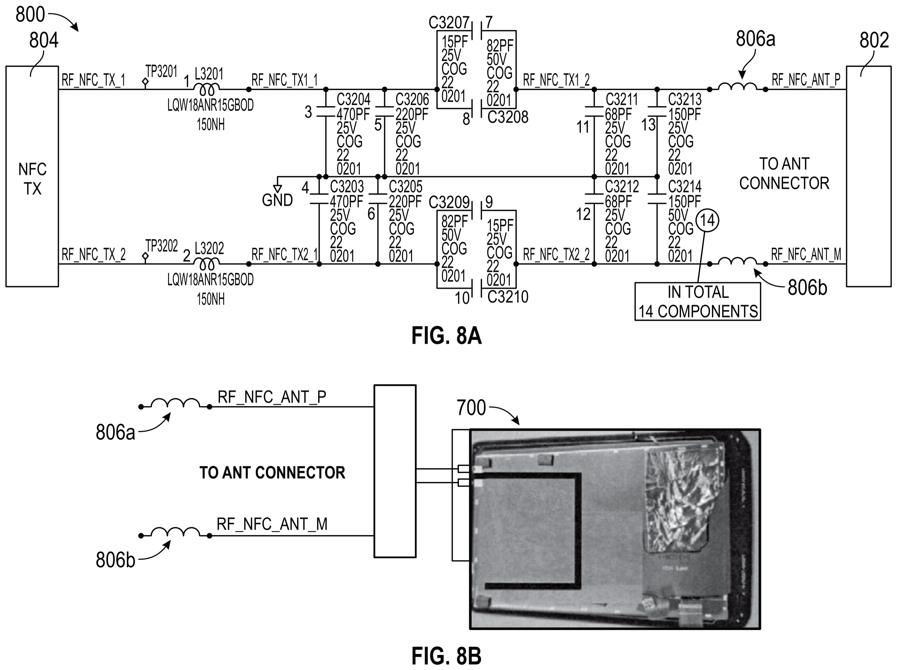

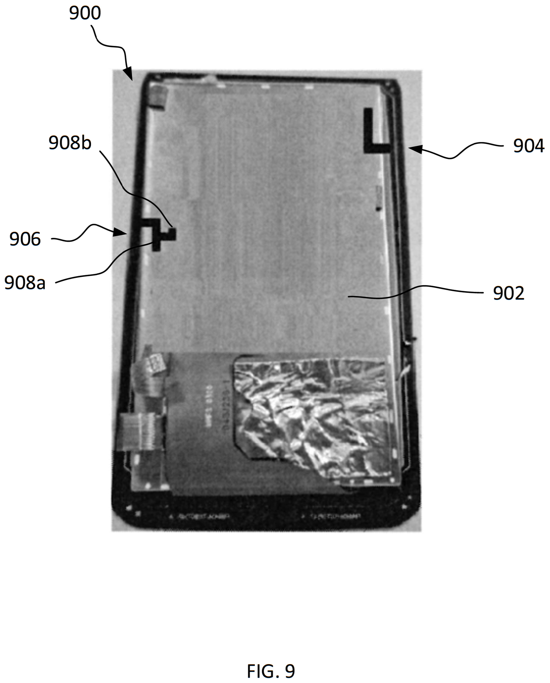

**FIGS. 5** and **6** depict schematics of illustrative circuits **500** and **600** configured to communicate NFC signals between an NFC transmitter **502** and the antenna **300** that is a single-ended antenna. The circuits **500** and **600** are specifically configured for single-ended antennas, such as the antenna **300,** and may include electronic components (e.g., tuning components) used to filter signals and allow specified frequencies to pass through, while rejecting other frequencies. A total number of electronic components included in the circuit **500** may be fewer than a traditional configuration of electronic components (see, for example, **FIG. 9**) for loop or non-single-ended antennas (see, for example, **FIG. 8**) in a typical mobile device, thereby resulting in lower manufacturing costs. The circuit **500** or **600** may be disposed on a main PCB of the mobile device **102** such that the signals are communicated with the antenna **300** via the contact **312** (**FIGS. 3A-****3C**), as previously described.

In **FIG. 5****,** the circuit **500** may include the transmitter **502** in electrical communication with a balun **504** (e.g., a device that allows balanced and unbalanced lines to be interfaced). In this embodiment, the balun **504** combines a first transmitter source (Txl) and a second transmitter source (Tx2) for a single-ended solution of the antenna **300.** The balun **504** may be electrically connected to an electrical conductor defining an electrical ground and the antenna **300.** The circuit **500** may also include a drive inductor **506** that is in electrical communication with the antenna **300.** In particular, because the antenna **300** has relatively low inductance, the drive inductor **506** may be used to increase inductance of the antenna **300,** thereby making it easier to tune the circuit **500** to match impedance of the antenna **300.** In an embodiment, the drive inductor **504** may be an 85 nano Henry (nH) inductor to drive inductance for the antenna **300.** However, the drive inductor **504** may have an inductance ranging from about 20 nH to about 150 nH, or higher, to reach about 201 nH. Other configurations of the circuits **500** and **600** and the antenna **300** may be utilized.

As shown in the schematic **600** of **FIG. 6****,** a reduced number of electronics may be used, where the balun **504** may not be utilized. Instead, the schematic **600** includes a combiner point **602** that combines multiple RF sources into an NFC signal for communicating by a single-ended antenna (e.g., the antenna **300,** such as an antenna configured to communicate NFC signals, etc.). The combiner point **602** is a point on the circuit **600** at which impedance transitions from a differential impedance to a single ended impedance. The circuit **600** is a low-cost solution for driving a single-ended antenna (e.g., the antenna **300,** an NFC antenna, etc.). If the antenna is a non-single-ended antenna, then an alternative circuity, such as shown in **FIG. 8A****,** may be utilized.

Turning now to **FIGS. 7A** and **7B****,** an alternative configuration of an antenna **700** defined by a back plate **702** is shown. In the embodiment of **FIG. 7A****,** the back plate **702** of an electronic display **704** of a mobile device **706** defines the antenna **700** in the form of a track or aperture that defines a slot antenna that operates over, for example, NFC frequencies. The antenna **700** may be formed by removing portion(s) of the back plate **702,** as opposed to the antenna **300** of **FIGS. 3A-3C** that has portions of the back plate **204** removed to define the antenna **300** as a strip antenna surrounded by the negative space **302** between the antenna **300** and the back plate **204.** In some embodiments, for example as shown in **FIG. 7B****,** the antenna **700** may have varying widths, such as, for example, approximately 0.1 mm to approximately 4 mm wide. Disposed within the aperture may be a material (e.g., the third material), which allows a magnetic field of signals (e.g., NFC signals, etc.) to pass towards and through the screen.

In the embodiment of **FIG. 7A****,** the antenna **700** is shown to be configured in a U-shape, in this case a rectangular "U" (i.e., an inverse of the antenna **300** of **FIGS. 3A-3C**). In such an embodiment, the back plate **702** may support two contacts **710a** and **710b** (collectively **710**) disposed on opposite portions **712a** and **712b** (collectively **712**) of the back plate **702** as the opposite portions **712** of the back plate **702** are to be in electrical communication with an electronic circuit including a transmitter (e.g., an NFC transmitter, etc.), such as shown in **FIG. 8A****.** Similar to the contact **312** of **FIGS. 3A-3C****,** the pair of contacts **710** are used to communicate signals **714a** and **714b** (collectively **714**) (e.g., NFC signals, etc.) to be communicated to the electronic circuit disposed on a PCB. In other embodiments, the antenna **700** may have any other shape for communicating signals, such as an L-shape, a V-shape, a curved shape, etc., and may define different angles or no angles. Although the antenna **700** is meant to communicate NFC signals, it should be understood that other non-NFC antenna(s) may be defined by a back plate **702** of a mobile device, as further shown and described herein with regard to **FIGS. 9-14****.** It should be understood that the antenna **700** is not a single-ended antenna. As such, a different circuit, such as provided in **FIG. 8****,** may be utilized for driving the antenna **700** with the signals **708.**

As provided in **FIG. 8A****,** a schematic of an illustrative circuit **800** configured to drive an antenna **802,** such as a non-single-ended antenna, a loop antenna, the antenna **700** of **FIGS. 7A** and **7B****,** etc., by an NFC transceiver **804** is shown. In an embodiment, the circuit **800** may include one or more inductors **806a** and **806b** that may be disposed in series with the antenna **802** to increase an overall inductance of the antenna **802** for improved tuning capability. **FIG. 8B** is an illustration of an illustrative antenna **700** electrically connected to the circuit **800** via the inductor(s) **806a** and **806b.**

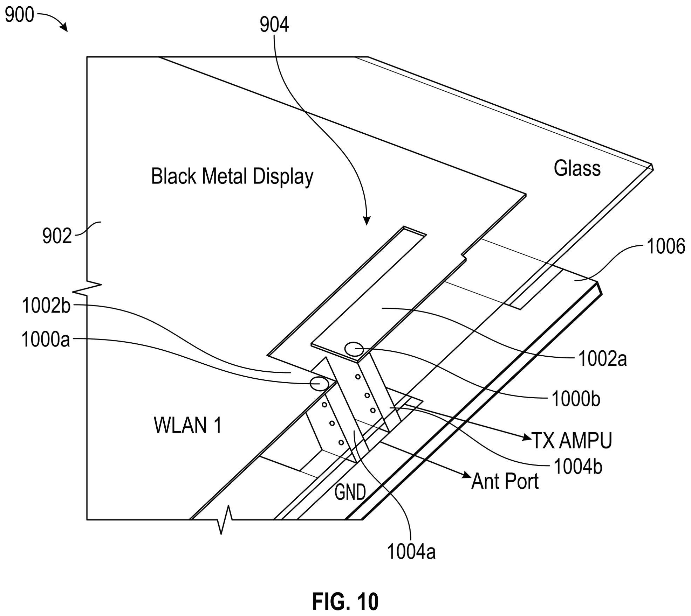

In **FIGS. 9-11****, 13,** and **14,** illustrations of an alternative mobile device **900** may include a back plate **902** being configured to define antennas **904** and **906,** is shown. For example, the antennas **904** and **906** may be far field antennas, or other antennas. The antennas **904** and **906** are defined by the back plate **902,** in the same or similar manner as the antenna **700,** of **FIG. 7A****.** The antennas **904** and **906** may be defined by one or more slots having a length of approximately 7 mm to approximately 50 mm. However, the shapes and sizes of the antennas **904** and **906** may be configured to support various communications frequencies, antenna patterns, etc. For example, the antennas **904** and **906** may be configured to support communications for WLAN communications operating at WLAN frequency bands, such as 2.4 GHz, 5 GHz, etc., for example. For example, the antennas **904** and **906** may be configured to support communications for WWAN communications, operating within a frequency range approximately from 800 MHz to 5 GHz. Dielectric material may be disposed within the slots in the same or similar manner as described with regard to **FIG. 4****.** In the same or similar manner as the antenna **700** of **FIGS. 7A** and **7B****,** contacts (see **FIG. 10**) may be disposed at each of the antennas **904** and **906.**

With further regard to **FIG. 9****,** the antennas **904** and **906** are depicted as different shapes including one or more channels and one or more angles. A first one of the antennas, for example, the antenna **904,** may be an L-shaped slot, while the second antenna, for example the antenna **906,** may be double L-shaped, where a primary portion **908a** of the antenna **906** is L-shaped and a secondary portion **908b** of the antenna **906** extends from the primary portion **908a** in another, but shorter, L-shaped slot. In some embodiments, the antennas **904** and **906** may be I-shaped, H-shaped, V-shaped, curved, etc., and may define different angles or may not define any angles.

**FIG. 10** shows the antenna **904** of **FIG. 9** in greater detail. As shown, metal contacts **1000a** and **1000b** (collectively **1000**) are disposed on respective portions **1002a** and **1002b** of the back plate **902.** The metal contacts **1000** may be disposed on opposing sides of the antenna **904** so as to be electrically connected to portions of the back plate **902** defining the antenna **904.** In an embodiment, a pair of metal springs, such as the PCB spring **322** of **FIG. 3D****,** that are aligned with the contacts **1000** may be in electrical and physical contact with the respective contacts **1000** to ground **1004a** and a transceiver amplifier feed line **1004b** as provided by electrical conductors on a PCB **1006.** In some embodiments, the positions of the ground **1004a** and the transceiver amplifier feed line **1004b** may be reversed, or may be in another configuration. It should be understood that configurations that do not utilize springs may be utilized, also.

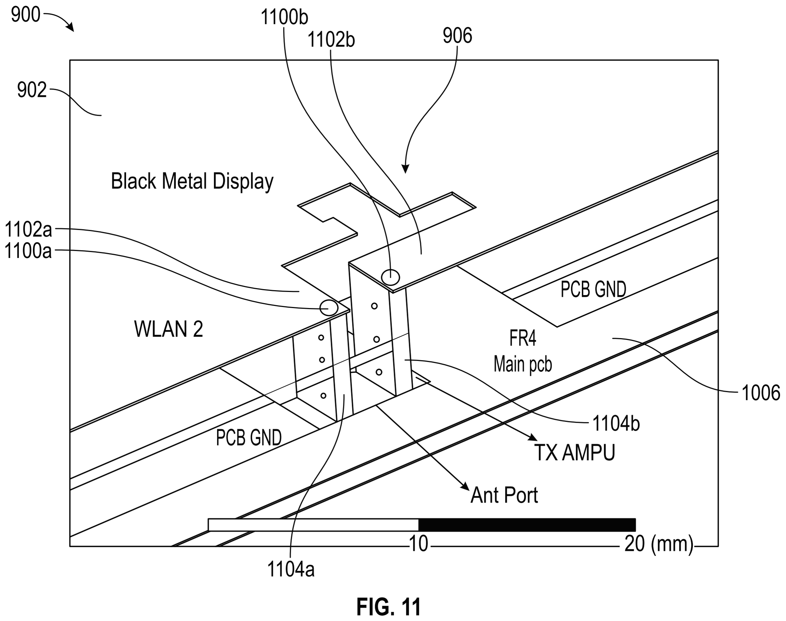

**FIG. 11** shows the antenna **906** of **FIG. 9** in greater detail. As shown, metal contacts **1100a** and **1100b** (collectively **1100**) are disposed on respective portions **1102a** and **1102b** of the back plate **902.** The metal contacts **1100** may be disposed on opposing sides of the antenna **906** so as to be electrically connected to portions of the back plate **902** defining the antenna **906.** In an embodiment, a pair of metal springs, such as the PCB spring **322** of **FIG. 3D****,** that are aligned with the contacts **1100** may be in electrical and physical contact with the respective contacts **1100** to ground **1104a** and a transceiver amplifier feed line **1104b** as provided by electrical conductors on the PCB **1006.** It should be understood that configurations that do not utilize springs may be utilized, also.

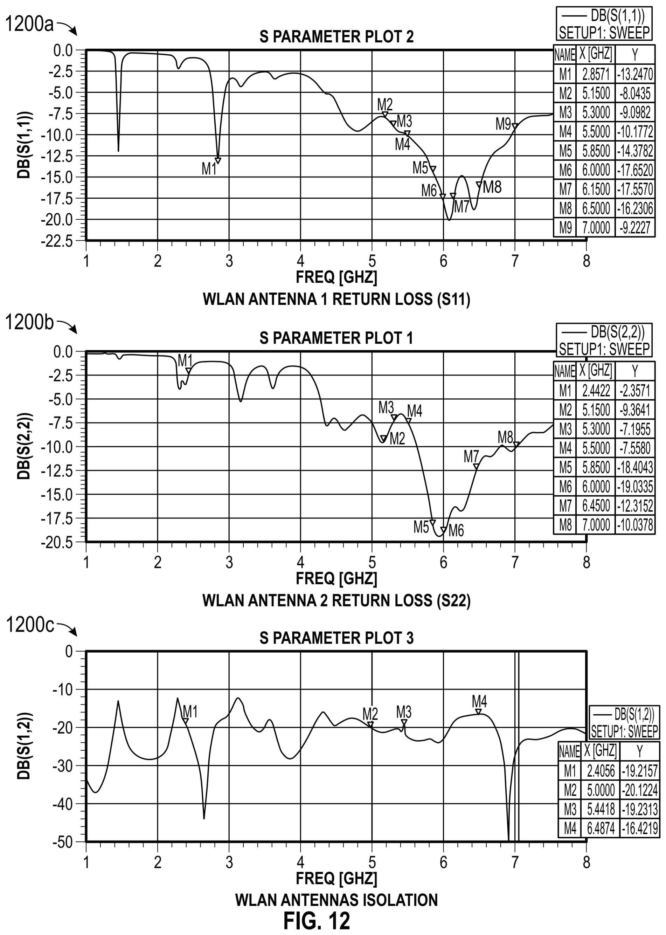

Turning now to **FIG. 12****,** graphs of illustrative figures of merit of antennas **1200a, 1200b,** and **1200c** are shown. The antenna pattern **1200a** depicts a return loss of a WLAN antenna, for example, the antenna **904** of **FIG. 10****.** The antenna pattern **1200b** depicts a return loss of a WLAN antenna, for example, the antenna **906** of **FIG. 11****.** The antenna pattern **1200c** depicts results of an isolation of the antennas **904** and **906** when the antennas **904** and **906** are positioned on the same back plate, such as the back plate **902,** as shown in **FIG. 9****.** The results depicted in the antenna pattern **1200c** show that it is possible for the antennas **904** and **906** to be positioned on the same back plate, even if the antennas **904** and **906** are operating on the same frequencies.

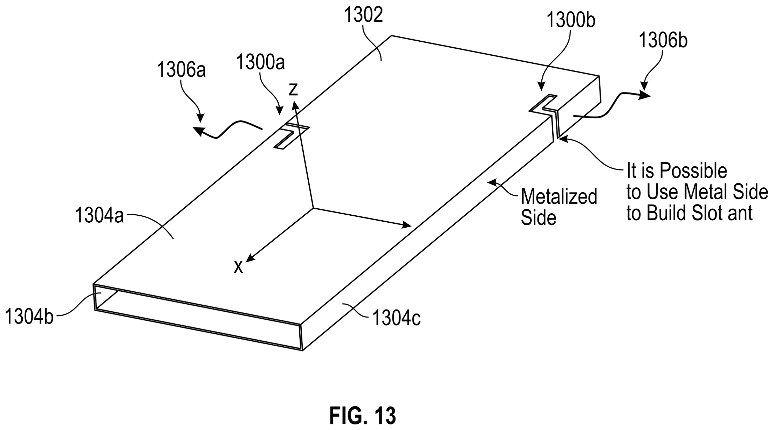

**FIG. 13** depicts antennas **1300a** and **1300b** (collectively **1300**) defined by a back plate **1302** that are alternative configurations of the antenna **904** of **FIGS. 9** and **10****.** In this case, the back plate **1302** has metalized sides so that the antennas **1300** are able to extend from a top surface **1304a** and along side surfaces **1304b** and **1304c.** The antennas **1300** are slot antennas, and may both be L-shaped on the top surface **1304a,** and extend along the side surfaces **1304b** and **1304c.** It should be understood that the shape and configuration of the antennas **1300** may have other shapes and configurations depending on frequencies over which signals are communicated to and from the antennas **1300.** By extending the antennas **1300** along the sides of the back plate **1302,** electromagnetic signals **1306a** and **1306b** may extend out sides of the mobile device in which the antennas **1300** are operating. In this case, the antenna **1300a** may have a length along the top surface **1304a** of approximately 10 mm, a length to the side surface **1304b** may be approximately 2 mm, and a length extending along the side surface **1304b** from the top surface **1304a** may be approximately 3.75 mm. A length of the antenna **1300b** along the top surface **1304a** may be approximately 7 mm to approximately 40 mm, and other dimensions of the antenna **1300b** may be the same or different from those of the antenna **1300a.** The slot widths of the antennas **1300** may be between about 1 mm and 3 mm. Alternative dimensions may be utilized, as well. In the embodiment of **FIG. 13****,** the back plate **1302** may be connected to a PCB shield, as previously described.

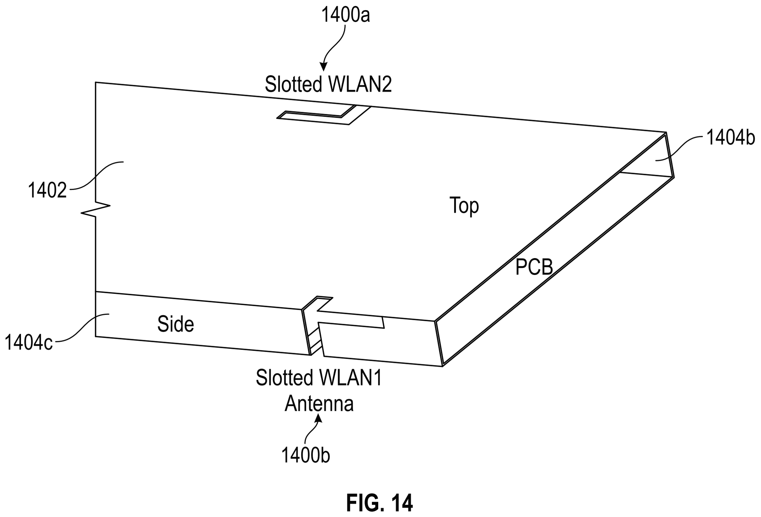

**FIG. 14** depicts yet another configuration for antennas **1400a** and **1400b** that have different configurations of the antennas **1300** of **FIG. 13****.** In this case, the antennas **1400** are defined on side surfaces **1404b** and **1404c** of a back plate **1402.** The antenna **1400b** may also include a slot that extends perpendicularly from the side surface **1404c** into a top surface **1404a,** while the antenna **1400a** may be substantially L-shaped, as also shown in **FIG. 13****.** By defining the antennas **1400** in the side surfaces **1404b** and **1404c** of the back plate **1402,** an antenna pattern from the antennas **1400** may extend out of the side of the mobile device in which the antennas **1400** are positioned.

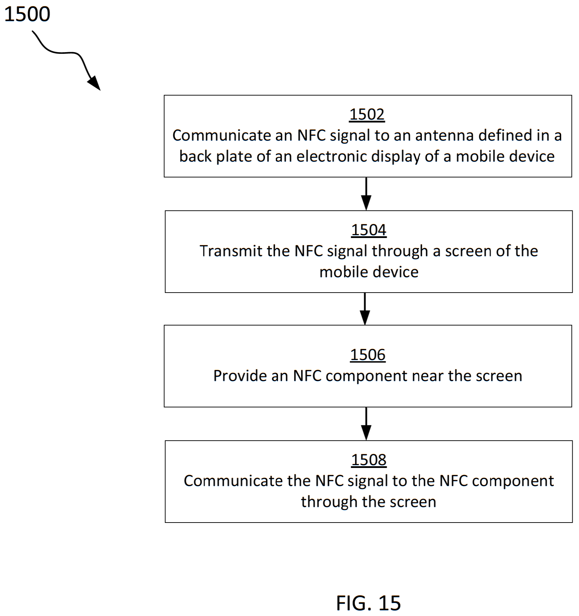

Turning now to **FIG. 15****,** a flow chart **1500** illustrates a method for communicating with a component (e.g., an NFC component or chip, the payment device **104,** a credit card, a mobile wallet, etc.) from a mobile device or another device acting as a payment card or in peer-to-peer mode. At step **1502,** a signal (e.g., an NFC signal, etc.) may be communicated to an antenna defined in a back plate of an electronic display of the mobile device. More specifically, at step **1502,** in performing a payment, a transmitter (e.g., an NFC transmitter, etc.) in a mobile device initiates a signal (e.g., an NFC signal, etc.) that is communicated to an antenna (e.g., an NFC antenna, etc.) defined by the back plate of the electronic display for communicating the signal to a payment device. At step **1504,** the signal may be transmitted from the antenna, through one or more dielectric materials, and then via a screen of the mobile device. At step **1506,** the component may be provided near the screen of the mobile device. At step **1508,** the signal may be communicated through the screen (i.e., directed towards and extends through the screen) of the mobile device to the component.

More specifically, at step **1508,** a (passive) NFC component of a payment device may receive a command instruction or signal from an active NFC component of a mobile device. The active NFC component transfers data via the NFC signal by modulating the carrier of the electromagnetic field generated thereby. The modulation is detected by the NFC component of the payment device and interpreted as data. The NFC component transfers data to the active NFC component of the mobile device by load-modulating the intensity of the field. The active NFC component of the mobile device detects the variation and interprets it as data. The NFC component then receives and reads the signal. In additional steps, information may be communicated from the NFC component to the mobile device (e.g., payment information, etc.).

### Embodiments of the invention

One embodiment of an electronic device may include a printed circuit board (PCB) on which electronics are disposed. An electronic display on which visual content is displayed for a user to view, where the electronic display includes a back plate and an antenna defined by the back plate. At least one contact electrically connected to a portion of the back plate defining the antenna. A screen, such as a glass screen, may be disposed on an opposite side relative to the back plate defining the antenna such that an antenna radiation pattern radiated by the antenna extends through the screen.

The electronic device may further include a first material disposed between the back plate and the PCB, and a second material disposed between the first material and the PCB. In an embodiment, at least one partially conductive material disposed on an opposite side of the back plate relative to the first material. The second material may be a copper adhesive material. The antenna may be configured to radiate near field communication (NFC) radio frequency (RF) signals. The first material may be a ferrite material configured to enable a specific frequency to be output by the antenna. At least one dielectric material may be disposed in an aperture defined by the back plate to define the antenna. The dielectric material(s) may be ceramic. In an embodiment, the back plate is made of metal. The antenna may be a single-ended antenna.

The antenna may be a strip formed from the back plate and be coplanar therewith, and the contact(s) include one and only one contact positioned on the strip forming the antenna. Tuning electronics may be electrically connected to the antenna, where the tuning electronics include a balun electrically connected to (i) an electrical conductor defining an electrical ground and the antenna, and (ii) a drive inductor in electrical communication with the antenna. Tuning electronics may be electrically connected to the antenna, where the tuning electronics may include a combiner point electrically connected to (i) an electrical conductor defining an electrical ground and the antenna, and (ii) a drive inductor in electrical communication with the antenna. The antenna may be defined by a slot removed from the back plate, thereby being coplanar therewith, where the contact(s) includes two contacts, one contact on either side of the slot. The antenna may be configured to radiate at least one of wireless local area network (WLAN) and wireless wide local area (WWAN) signals

The electronic device may be a mobile electronic device or non-mobile electronic device. The electronic device may be a barcode reader.

One embodiment of a method of communicating with a payment device with a near field communication (NFC) component from an electronic device may include communicating a first signal to an antenna defined in a back plate of an electronic display of the electronic device. The first signal may be transmitted from the antenna through a screen of the electronic device. In response to a payment device with a component being positioned at the screen, a second signal may be received through the screen of the electronic device by the antenna.

A first non-NFC signal may be communicated to a second antenna defined in the back plate. The first non-NFC signal may be transmitted from the second antenna through a screen of the electronic device. A second non-NFC signal may be received through the screen of the electronic device via the second antenna. Communicating the first non-NFC signal may include communicating a wireless local area network (WLAN) signal to the second antenna.

An electronic display may include a back plate, an antenna defined by the back plate, at least one contact electrically connected to portion of the back plate defining the antenna, and a screen disposed on an opposite side relative to the back plate defining the antenna such that an antenna radiation pattern radiated by the antenna extends through the screen.

The antenna may be a strip formed from the back plate and coplanar therewith, and wherein the at least one contact includes one and only one contact positioned on the strip forming the antenna. The antenna may be defined by a slot removed from the back plate, thereby being coplanar therewith, and wherein the at least one contact includes two contacts, one contact on either side of the slot. The antenna may be a single-ended antenna.

A method of manufacturing a mobile device may include providing an electronic display of the mobile device. An antenna may be defined in a back plate of the electronic display. At least one dielectric material may be positioned within an aperture defined in the back plate and formed to define the antenna. A first material may be positioned at least partially over the antenna. A second material may be positioned at least partially over the first material. A partially conductive material may be positioned on an opposite side of the back plate relative to the first material. The electronic display may be coupled to a screen. The electronic display may be coupled to a rear portion of the mobile device.

Positioning a first material may include positioning a ferrite material configured to support a specific frequency output by the antenna. Positioning at least one dielectric material may include positioning a ceramic material. Defining an antenna in a back plate may include defining an antenna in a metal. Defining an antenna may include defining a single-ended antenna. Defining an antenna in the back plate of the electronic display may further include removing material from the back plate to form an aperture.

The illustrations included herewith are not meant to be actual views of any particular systems, device, architecture, or process, but are merely idealized representations that are employed to describe embodiments herein. Elements and features common between figures may retain the same numerical designation except that, for ease of following the description, for the most part, reference numerals begin with the number of the drawing on which the elements are introduced or most fully described. In addition, the elements illustrated in the figures are schematic in nature, and many details regarding the physical layout and construction of a memory array and/or all steps necessary to access data may not be described as they would be understood by those of ordinary skill in the art.

As used herein, the singular forms "a," "an," and "the" are intended to include the plural forms as well, unless the context clearly indicates otherwise.

As used herein, "or" includes any and all combinations of one or more of the associated listed items in both, the conjunctive and disjunctive senses. Any intended descriptions of the "exclusive-or" relationship will be specifically called out.

As used herein, the term "configured" refers to a structural arrangement such as size, shape, material composition, physical construction, logical construction (e.g., programming, operational parameter setting, etc.) or other operative arrangement of at least one structure and at least one apparatus facilitating the operation thereof in a defined way (e.g., to carry out a specific function or set of functions).

As used herein, the phrases "coupled to" or "coupled with" refer to structures fixedly or operably connected with each other, such as connected through a direct connection or through an indirect connection (e.g., via another structure or component).

The foregoing method descriptions and/or any process flow diagrams are provided merely as illustrative examples and are not intended to require or imply that the steps of the various embodiments must be performed in the order presented. As will be appreciated by one of skill in the art, the steps in the foregoing embodiments may be performed in any order. Words such as "then," "next," etc. are not intended to limit the order of the steps; these words are simply used to guide the reader through the description of the methods. Although process flow diagrams may describe the operations as a sequential process, many of the operations may be performed in parallel or concurrently. In addition, the order of the operations may be re-arranged. A process may correspond to a method, a function, a procedure, a subroutine, a subprogram, etc. When a process corresponds to a function, its termination may correspond to a return of the function to the calling function or the main function.

The various illustrative logical blocks, modules, circuits, and algorithm steps described in connection with the embodiments disclosed here may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to and/or in communication with another code segment or a hardware circuit by passing and/or receiving information, data, arguments, parameters, or memory contents. Information, arguments, parameters, data, etc. may be communicated (e.g., passed, forwarded, and/or transmitted) via any suitable means including memory sharing, message passing, token passing, network transmission, etc.

When implemented in software, the functions may be stored as one or more instructions or code on a non-transitory computer-readable or processor-readable storage medium. The steps of a method or algorithm disclosed here may be embodied in a processor-executable software module which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used here, include compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The previous description is of various preferred embodiments for implementing the disclosure, and the scope of the invention should not necessarily be limited by this description. The scope of the present invention is instead defined by the claims.

## Claims

1. An electronic device, comprising:
a printed circuit board (PCB) on which electronics are disposed; and
an electronic display on which visual content is displayed for a user to view, the electronic display comprising:
a back plate;
an antenna defined by the back plate;
at least one contact electrically connected to a portion of the back plate defining the antenna; and
a screen disposed on an opposite side relative to the back plate defining the antenna such that an antenna radiation pattern radiated by the antenna extends through the screen.

2. The electronic device of claim 1, further comprising:
a first material disposed between the back plate and the PCB; and
a second material disposed between the first material and the PCB.

3. The electronic device according to claim 1 or 2, wherein the antenna is configured to radiate near field communication (NFC) radio frequency (RF) signals.

4. The electronic device according to any one of the previous claims, further comprising tuning electronics electrically connected to the antenna, the tuning electronics including a balun or a combiner point electrically connected to (i) an electrical conductor defining an electrical ground and the antenna, and (ii) a drive inductor in electrical communication with the antenna.

5. The electronic device according to claim 2 or to claim 3 or 4 when depending on claim 2, wherein the first material is a ferrite material configured to enable a specific frequency to be output by the antenna.

6. The electronic device according to claim 2 or to claim 3 or 4 when depending on claim 2, wherein the second material is a copper adhesive material.

7. The electronic device according to any one of the previous claims, wherein the back plate is made of metal.

8. The electronic device according to any one of the previous claims, wherein the antenna is a single-ended antenna.

9. The electronic device according to any one of claims 1 to 7, wherein the antenna is a strip formed from the back plate and coplanar therewith, and wherein the at least one contact includes one and only one contact positioned on the strip forming the antenna.

10. The electronic device according to any one of claims 1 to 7, wherein the antenna is defined by a slot removed from the back plate, thereby being coplanar therewith, and wherein the at least one contact includes two contacts, one contact on either side of the slot.

11. The electronic device according to any one of the previous claims, wherein the antenna is configured to radiate at least one of wireless local area network (WLAN) and wireless wide local area (WWAN) signals.

12. The electronic device according to any one of the previous claims, wherein the electronic device is a mobile electronic device.

13. The electronic device according to any one of the previous claims, wherein the electronic device is a barcode reader.

14. A method of communicating with a payment device with a near field communication (NFC) component from an electronic device, comprising:
communicating a first signal to an antenna defined in a back plate of an electronic display of the electronic device;
transmitting the first signal from the antenna through a screen of the electronic device; and
in response to the payment device with a component being positioned at the screen, receiving a second signal through the screen of the electronic device by the antenna.

15. The method of claim 13, further comprising:
communicating a first non-NFC signal to a second antenna defined in the back plate;
transmitting the first non-NFC signal from the second antenna through a screen of the electronic device; and
receiving a second non-NFC signal through the screen of the electronic device via the second antenna.
